# EUROPEAN PATENT APPLICATION

(11) **EP 4 538 636 A1**
(43) Date of publication of application: **16.04.2025**
(21) Application number: 23202336.6
(22) Date of filing: 09.10.2023
(51) Int. Cl.: G01B 21/04, G01B 5/008, G01B 11/00, B25J 19/02

(54) **COORDINATE MEASUREMENT SYSTEM HAVING AT LEAST TWO LIMBS**

(71) Applicant: Hexagon Technology Center GmbH, 9435 Heerbrugg (CH)
(72) Inventor: KHANENYA, Nikolay, 9000 St.Gallen (CH); ISELI, Claudio, CH-9434 Au (CH); JORDIL, Pascal, CH-1612 Ecoteaux (CH)
(74) Representative: Kaminski Harmann

(57) **Abstract**

The invention relates to a coordinate measuring machine (CMM) for determining spatial coordinate data of an object point on a workpiece. The CMM comprising, a first limb, a probing element, a second limb, and a coupling interface. The probing element provides probing data regarding an interaction between a sensing area and the object point. The first limb connects the sensing area to a first proximal end. The coupling interface is configured to provide coupling data regarding an interaction between a coupling area and a reference point having a defined spatial relationship to the object point. The second limb connects the sensing area to a second proximal end mechanically constrained to the first proximal end. The CMM is configured to (i) access the actual pose of the sensing area, (ii) access an actual pose of the coupling area, (iii) provide coupling pose change data based on the actual pose of the coupling area and the coupling data, (iv) provide the coordinate data of the object point based on the actual pose of the sensing area, the probing data and the coupling pose change data.

## Description

### FIELD OF THE INVENTION

The present invention relates to a structure and operation of a metrology instrument, in particular a coordinate measuring machine (CMM) or a metrology robot. The instrument comprises a first limb with a probing element mounted on it, a second limb with a coupling interface mounted on it. The limbs comprise respective sets of links and joints. The CMM provides the actual pose of the probing element and the coupling interface based on sensor readings from sensors associated with the links and joints. The invention further relates to a method for determining the spatial coordinates of an object point on a workpiece and a respective computer program product for performing the computational steps of the method.

### BACKGROUND OF THE INVENTION

CMM devices are used in a wide variety of applications in quality management and quality assurance. CMMs include stationary-, portable- or laser-based CMMs, including laser trackers, laser scanners and total stations. Metrology robots, i.e., CMMs on mobile or airborne chassis further extends the applicability of the above instruments. For the present invention CMM is to be understood as an instrument configured to provide metrology grade coordinate data. Unless otherwise provided this definition covers both stationary, mobile, or airborne instruments and both tactile and non-contact data acquisition methods.

One widespread example of a basic CMM is a 3-axis system. E.g., DE 43 25 347 discloses such a system. Typically, such CMM includes a base with a measuring table and a movable frame. The workpieces might be positioned or mounted on the measuring table. The movable frame is mounted on the base such that it can move along a first axis. The frame comprises an arm mounted movably along a second axis perpendicular to the first axis. The probing element is mounted on the arm such that it can move along a third axis, which is perpendicular to the first and second axes. This construction enables the steering of the probing element in all three dimensions allowing to measure relevant 3D coordinates of an object. Contemporary 3-axis systems often comprise further components, e.g., stacked rotary tables, to provide 5 degrees of freedom regarding the relative pose of the probing element and workpiece. Throughout this document, unless expressly provided otherwise, position will be used to represent the 3D location, while pose represent a six-dimensional position and orientation information.

Another typical embodiment is the articulated arm coordinate measuring machine (AACMM). An AACMM comprises a stationary base and an arm with multiple arm segments connected by articulations. The articulations provide mobility to a movable end of the arm opposed to the base. Probing elements can be attached to the movable end. Due to the design principles AACMM-s are less accurate than the above mentioned 3- or 5-axis system, however they offer higher flexibility. E.g., EP 2 916 099 B1 discloses such an AACMM instrument.

Conventionally, highly precise CMM need to be very stable to withstand inertial distortions that may arise due to its own operating weight and - especially since fast measurements are also desirable - its movements. Conventional CMM are thus very heavy devices that are complicated to move and cannot be installed everywhere, e.g., due to weight-loading restrictions. Especially for portable CMMs lightweight design is preferable, in particular due to work safety guidelines regarding manual handling heavy items.

To achieve the required precision CMMs are often installed in dedicated metrology laboratories providing low vibration environment and strictly controlled temperature and humidity. This means, however, that in-line control of the workpieces is not possible as the CMM is located in a separate area typically far away from the manufacturing areas. This leads to a slow feedback loop and less frequent quality controlling, i.e., higher reject rate.

It would be desirable to provide a lightweight CMM that still allows highly precise measurements. It would also be desirable to provide a mobility or simplified transportability of the lightweight CMM. Mobile CMMs allow more efficient industrial processes, by reducing the need of placing bulky and costly measurement devices to each production lines. Mobile CMMs by reducing the waste rate could improve the use of raw materials and hence contributing to the establishment of circular economies.

Some aspects of the CMMs will be disclosed utilizing the terms of metrology and kinematic chains comprising respective links and joints. Unless otherwise provided "links" and "joints" are to be understood as metrology links and joints. It is assumed that metrology chains are configured to provide metrology chain data, in particular a relative pose of the endpoints of the chain with metrology grade precision.

A "metrology joint" measures the relative pose or movement of adjacent members of the metrology chain. Joints in the sense of the invention are to be understood in a generic manner, i.e., they encompass one degree-of-freedom rotary and linear joints, and more degrees-of-freedom joints, e.g. ball joints. Trackable areas continuously tracked by optical tracking instruments can also be joint in the sense of the invention. For metrology links at least a change of the geometry, in particular the absolute geometry is known. In the sense of the invention metrology links comprise rigid members of the limbs, in particular with known geometry, or non-rigid members whose geometry is provided. The distance between the sensing area and the object point established by e.g., an optical measurement might also be considered as a metrology link. From here on it is implicitly assumed that metrology joints and links comprise the respective sensors.

A kinematic chain is an arrangement comprising a set of kinematic links substantially transferring forces with negligible distortion, and a set of kinematic joints assembled. Kinematic links might be rigid, experiencing no distortion. Kinematic joints provide movement independently from the further members, in particular other kinematic joints. For this invention kinematic links and joints are to be understood as a subtype of metrology links and joints. Rigid and substantially rigid will be used in an interchangeable manner and express that that a component is non-deformable under reasonably expected loads.

A metrology chain might comprise one or more kinematic elements arranged to one or more kinematic chains. A metrology chain might comprise further elements not comprised by a kinematic chain, in particular a measuring path with known geometry and/or a spatial relationship of the measuring probe relative to the workpiece. In the sense of the invention metrology loops might be closed or semi-closed arrangements of one or more metrology chains. For closed metrology loops the absolute value of each of the relevant dimensions and arrangement of their members is known. For semi-closed metrology loops at least a change of each relevant dimensions and arrangement of their members are known, e.g., they might comprise a rigid member with unknown absolute dimensions.

### OBJECT OF THE INVENTION

In view of the above circumstances, one object of the present invention is to provide a CMM with more flexibility regarding the installation.

Another objective of the present invention is to improve the accuracy and the repeatability of the measurements by CMMs.

Another object of the present invention is to improve the time efficiency of the CMMs by providing faster measurement options retaining the precision standards.

These objectives are at least partly achieved by realizing the characterizing features of the independent claims. Features further developing the invention in alternative or advantageous manner are described in the dependent patent claims.

### SUMMARY OF THE INVENTION

The present invention relates to a CMM comprising a first limb, a probing element, a second limb, and a coupling element. CMM in the sense of the invention covers instruments configured to provide metrology grade coordinate data of an object point on a workpiece. The invention is applicable for a wide variety of CMMs in particular stationary, portable or mobile CMMs. Mobile CMMs might be realized as unmanned aerial vehicles (UAV) or as wheeled, tracked or legged, e.g., humanoid, robots configured to provide coordinate data with the respective precision.

The probing element is configured to provide probing data. The probing data comprises interaction information between a sensing area of the probing element and the object point. The probing element might comprise a tactile sensor and the probing data might comprise tactile measurement data. E.g., the probing data might comprise information regarding the relevant forces, in particular contact and friction forces, acting between the workpiece and the tactile probe. The probing data might comprise geometry information regarding the probe. The probing data might comprise information regarding an angle between the probe, in particular a measuring axis of the probe, and a derived workpiece surface and/or a derived measurement path comprising an object point whose spatial coordinate data have been acquired in a precedent step.

The probing element might be a non-contact probe, in particular a laser probe, even more particular a laser probe configured for distance measurement by triangulation, interferometry, or time of flight measurements. The probing data might comprise information regarding a distance between the sensing area, in particular a detector, and the object point. The probing data might comprise information regarding the optical properties of the workpiece surface. The probing data might comprise information regarding an angle between a measuring axis of the probe and a derived workpiece surface and/or a derived measurement path comprising an object point whose spatial coordinate data have been acquired in a precedent step and/or during the actual measuring step.

The first limb comprises a first set of joints and a first set of links. From here on it is assumed that a first set of sensors is associated with the first set of joints and links. The first limb connects the probing element at a sensing end to a first proximal end. In particular for AACMMs the first limb might be foreseen as a structure analogous to a human arm having a first set of joints providing substantially rotational movability. The invention is, however, not limited to this narrow interpretation of the limb and the aspects of the invention might be applicable to 3-axis or 5-axis CMM-s as well. The first set of joints might comprise sliding joints representing the movability of these systems.

The probing element and the first limb are functional definitions, in particular they are defined with respect to the actual measurement task. The first limb might have extensions, in particular an extension having an alternative probing or coupling element. Such extensions might be a part of the same physical component, e.g., a rigid component with a branch. A plurality of first limbs might be utilized during a measurement task sequentially or in parallel. By way of example from here on only embodiments with a single first limb are discussed in details. The specifics of further embodiments might be applied accordingly.

The invention is applicable to CMMs having a single probing element with a single sensing area arranged on the sensing end of a limb. The invention is equally applicable to CMMs with a plurality of sensing units arranged to different locations on a single limb and/or arranged to a plurality of limbs. For the invention the interaction surface of the sensing elements, in particular detector surfaces and/or ruby spheres or diamonds, providing probing data are considered as sensing area, whereas one or more first limbs are linking these sensing areas to the first proximal end. Inventive CMMs with a plurality of sensing elements might not use each of the sensing units to provide probing data, in particular a sensing units might provide coupling data.

The coupling interface is configured to provide coupling data comprising interaction information between the coupling area and a reference point. The object point has a defined spatial relationship to the reference point. The reference point might be comprised by the workpiece. In particular the workpiece is assumed to be rigid under the influence of the forces and moments experienced during a measurement process. Workpieces could comprise mountings temporarily arranged to the workpiece. The coupling interface might provide mechanical coupling, i.e., the coupling interface might be locked to the workpiece. The coupling interface might be configured to move the workpiece. Alternatively, the coupling interface might provide metrological coupling, i.e., the relative pose of the coupling area to the reference point is known with an accuracy corresponding to that of the CMM measurement. From here on, unless otherwise provided, coupling is used in the sense of six degrees-of-freedom coupling. Specific features of other types of coupling interfaces / data might be applied accordingly.

The second limb comprises a second set of links, and/or a second set of joints. From here on it is assumed that a second set of sensors is associated with the second set of joints and links. The second limb connects the coupling interface at a coupling end to a second proximal end. The second proximal end is mechanically constrained to the first proximal end. I.e., a movement of one of the proximal ends causes a movement of the other. The second limb might consist of a single joint or a single link for some embodiments. The second limb might comprise a plurality of joints and links and be analogous to the first limb, in particular identical. The coupling interface might be a probing element. By way of example only embodiments wherein the second limb is analogous to the first limb will be discussed in detail. Specific features of embodiments with different types of second limb might be applied accordingly. The limbs provide metrology chains between the coupling/sensing areas and the proximal ends and metrology chain data based on sensor readings of the set of sensors.

A support structure might connect the first and second proximal ends. Unlike to further auxiliary components, e.g., a mobile chassis, the support structure is considered to be a part of the metrology loop. For closed or semi-closed measurement loops the first and second limbs and the support structure are functional definitions. Whether a particular physical component is assigned to the first limb, the second limb or the support structure is, to some degree, a matter of interpretation. The CMM, in particular a controller of the CMM, is configured (i) to determine an actual pose of the sensing area, in particular based on sensor readings of the first set of sensors, (ii) to determine an actual pose of the coupling area, in particular based on sensor readings of the second set of sensors, (iii) to provide coupling pose change data based on the actual pose of the coupling area and the coupling data, and (iv) to provide the coordinate data of the object point based on the probing data, the actual pose of the sensing area, and the coupling pose change data. It is self-explanatory that the utilization of numerals and letters does not represent e.g., a sequence of performing the steps. These and all further numbers do not represent a temporal and spatial connection, not even in the form of a preferred sequence, and merely serve the purpose of readability.

In some embodiments, the first and the second proximal ends coincide. In other words, at least a part of a joint is comprised by both the first and second set of joints or at least a part of a link is comprised by both the first and second sets of links. Alternatively, a substantially rigid support structure might connect the first and second proximal ends. Such embodiments are beneficial as the metrology loop can be decoupled from environment influences, in particular from vibrations.

In some embodiments, each joint of the first set of joints comprises (i) a proximal side linked to the first proximal end by a respective proximal portion of the first limb, (ii) distal side linked to the sensing area by a respective distal portion of the first limb, and (iii) a joint sensor unit configured to provide first joint sensor data regarding a relative pose and/or pose change between the proximal and distal sides of the joint. The proximal and distal sides, especially for joints with more than one degree-of-freedom, might be represented with a plurality of equivalent models. The invention is not limited to a given representation of the metrology chains, in particular the joints. Each joint of the second set of joints comprises (i) a proximal side linked to the second proximal end by a respective proximal portion of the second limb, (ii) a distal side linked to the coupling area by a respective distal portion of the second limb, and (iii) a joint sensor unit configured to provide second joint sensor data regarding a relative pose and/or pose change between the proximal and distal sides of the joint. By way of example only embodiments, wherein the joints of the second set of joints are substantially similar to the first set of joints are discussed in detail. The specific features of alternative embodiments, in particular wherein a part of the joints second set of joints is less accurate and/or simpler than the joints of the first set of joints, may be applied accordingly.

In some specific embodiments, the CMM is configured to access computer generated or operator input data regarding a desired pose or movement of the sensing area. A subset of the first set of joints, in particular each joint, comprises a first drive unit configured to provide the relative pose and/or the pose change between the proximal and distal side of the joint. In other words, at least one joint of the first set of joints might be kinematic joints. The CMM is configured to provide steering commands for the first drive units based on the desired pose or movement and the actual pose of the sensing area.

In some specific embodiments, the CMM is configured to access computer generated or operator input data regarding a desired pose or movement of the coupling area. A subset of the second set of joints, in particular each joint, comprises a second drive unit configured to provide the relative pose and/or the pose change between the proximal and distal sides of the joint. I.e., at least one joint of the second set of joints might be kinematic joint. The CMM is configured to provide steering commands for the second drive units based on the desired pose or movement and the actual pose of the coupling area.

In some specific embodiments, the drive and sensor units are integrated into a common module comprising a motor circuit board, a stator, and a rotor. The rotor is configured to rotate relative to the stator about a rotation axis, wherein the rotor is controlled by the motor circuit board. The common module might comprise a gearbox to transform - according to a defined gear ratio - a rotary motion of the rotor about the rotation axis into a rotary motion of a gearbox output component about the rotation axis. The motor circuit board and the stator are arranged axially with respect to the rotation axis on one side of the gearbox, denoted gearbox input side. The gearbox output component engages the gearbox from the other side of the gearbox, denoted gearbox output side. The common module further comprises a connecting part which extends from the gearbox output side to the gearbox input side and is configured to pick up the rotation of the gearbox output component in a rigid manner, thereby providing rotation of the connecting part conforming, e.g., being identical, to the rotation of the gearbox output component. The common module further comprises a rotary encoder configured to detect a rotation of the gearbox output component about the rotation axis. The rotary encoder is arranged on the gearbox input side and configured to provide for measuring a rotation of the connecting part about the rotation axis. Combining two of the above common modules into a dual axis common module is also possible.

In some embodiments, the CMM is configured (i) to store first and second limb calibration parameters, (ii) to determine the actual pose of the sensing area based on the first limb calibration parameters, and (iii) to determine the actual pose of the coupling area based on the second limb calibration parameters. Said calibration parameters might comprise data regarding dynamic behavior of the CMM, in particular sets of deformations of the links and/or the joints when the movements of the CMM are performed with high acceleration and/or under the influence of the gravity. The calibration parameters might also comprise information regarding the thermal behavior of the respective limbs, e.g., on the influence of thermal gradients.

In some specific embodiments the CMM comprises an internal calibration object and reference-free calibration functionality. The reference-free calibration functionality comprises (i) providing a calibration pose of the internal calibration object, (ii) providing first calibration data comprising spatial coordinates of the internal calibration object in the calibration pose based on the first limb calibration parameters, (iii) providing second calibration data comprising spatial coordinates of the internal calibration object in the calibration pose based on the second limb calibration parameters, (iv) providing deviation data based on the first and second calibration data, in particular wherein the deviation data is proportional to a difference of the spatial coordinates, and (v) updating the first and/or second limb calibration parameters based on the deviation data.

In some specific embodiments, a plurality of calibration poses of the internal calibration object is provided. If a CMM has L>1 limbs, D active degrees-of-freedom per limb, A poses of end-effectors connected together, and C calibration parameters per limb, then the number of unknowns is *U*=*L*×*C*+*A*×6, while the number of knowns is *K*=*L*×*A*×*D*. If *K*>>*U*, i.e., the number of knowns significantly exceed the number of unknowns, a self-calibration is possible without a reference system. Such self-calibration is especially suitable if one of the limbs is less accurate than the other, e.g., as a result of a collision. Furthermore, such self-calibration might provide feedback regarding the calibrated state of the limbs. In some embodiments, the reference-free calibration functionality further comprises mechanically interlocking the first and second limbs. Or in alternative words, during the calibration only a constrained movement is allowed, wherein the calibrated state is represented by a deviation of zero.

In some specific embodiments the internal calibration object is (i) the sensing area, (ii) the coupling area, (iii) a second limb calibration object, in particular a calibration pattern with a plurality of calibration objects in a known spatial arrangement, arranged on the second limb, or (iv) a first limb calibration object, in particular a calibration pattern with a plurality of calibration objects in a known spatial arrangement, arranged on the first limb. The above list is non-exclusive and other embodiments of the invention might utilize different internal calibration objects. Moreover, the internal calibration object might alternate during a calibration routine. This can be especially useful for a two-step calibration routine, wherein a first step involves a calibration of a first portion of the first limb and a second step involves a calibration of a second portion partially different from the first portion.

In some embodiments, the coupling interface is configured to provide a rigid mechanical coupling between the coupling area and the reference point. The coupling data comprises data regarding the presence of the rigid mechanical coupling. In some specific embodiments, the coupling interface is configured to grip the workpiece. The CMM is configured provide steering commands for the second limb, in particular the second drive units, based on the actual pose of the coupling area and relative coordinate data of the reference point.

In some specific embodiments, the coupling interface comprises a first locking element and the workpiece comprises a second locking element associated with the reference point. The first and second locking elements are configured to provide a releasable, substantially rigid mechanical contact, in particular a permanent magnetic contact, and/or an electromagnetic contact, and/or a one-ball coupling, and/or a three ball-coupling, and/or a lock-and-key contact and/or a bolted connection.

In some specific embodiments, when rigid mechanical coupling between the coupling area and the reference point is provided the mobility for a part of the second set of joints is further reduced. In particular an immobile state for each joint in the second set of joints is established. In such embodiments the whole second limb can be considered a rigid element. An advantage of this approach is that no influence, in particular measurement noise, might arise from the second limb. Furthermore, the measurement task is simplified as only the first limb have to be controlled, this is especially advantageous during a manual measurement under direct operator control. The invention is, however, applicable without immobilizing the second limb or establishing a rigid mechanical coupling between the coupling interface and the workpiece.

In some embodiments, the workpiece comprises a traceable pattern, in particular an optically traceable pattern, more particularly a QR-code. A pose of the reference point is associated with a traceable patter. The CMM is configured to (i) identify the traceable patter e.g., by pattern recognition, and (ii) provide a relative pose of the coupling area to the reference point, e.g., by means of an optical distance measurement. The coupling data comprises the relative pose of the coupling area to the reference point. Such embodiments are advantageous as they allow the closing of the measurement loop without touching the workpiece. Non-contact measurements, without force applied on the workpiece are beneficial for non-rigid workpieces as it reduces the risk of workpiece deformation during the measurement. In the sense of the invention tracing and tracking provide an analogous effect and are used interchangeably. The coupling data might be provided by optically tracing the traceable pattern, e.g., by performing a structure from motion analysis on the images acquired.

In some embodiments, each joint of the first and second set of joints is a rotary joint, each of the links has a substantially cylindrical shape, the pose change between the respective base and the distal sides is a rotation around one or more axes, and the respective joint sensor data comprises rotation angle data. In other words, the CMM follows the design of a contemporary AACMM. Substantially cylindrical in the sense of the invention means that the link comprises no kinks, bends, branches, or similar structures, however they might comprise recesses, cavities, notches or similar structures. The links and/or the joints might comprise associated auxiliary components providing increased mechanical stability. Substantially cylindrical might also e.g., mean prismatic or conical shapes.

In some embodiments, the probing element comprises a tactile sensor and the probing data comprises contact and/or friction force information between the sensing area and the object point. Such embodiments provide higher accuracy and precision, the invention is however not limited to them.

In some embodiments, the links of the first and second set, the support structure and the workpiece are mechanically rigid, in particular the CMM is configured to access the defined spatial relationship between the object and the reference points. Such embodiments are beneficially combinable with rigid mechanical coupling between the workpiece and the coupling interface and tactile probing. I.e., a measuring loop comprising only rigid elements and joints, in particular joints providing one or more rotational degrees-of-freedom.

In some embodiments each of the links have sensors associated with them. The associated sensors are configured to provide geometry data regarding the respective link, in particular regarding a length and/or a bending of the respective link. Alternative to an ideally rigid links enabling only rigid body movements the geometry of the links might also be provided by sensor measurement. Such geometry data might be further supported by a computer modelling of the CMM.

In some embodiments, the CMM further comprises a non-contact tracking unit, in particular a laser and/or image-based tracking unit, for determining a pose of the sensing area and/or the coupling area. Such non-contact tracking unit might alternatively or additionally provide the pose of the sensing and/or the coupling area. In particular the non-contact tracking unit might provide verification measurement regarding the joint sensor data.

In some specific embodiments, the first limb and/or the probing element comprises a first six degrees-of-freedom trackable area, in particular a retroreflector or a visual marker, associated with the pose of the sensing area. Alternatively or additionally, the second limb and/or the coupling interface comprises a second six degrees-of-freedom trackable area, in particular a retroreflector or a visual marker, associated with the pose of the coupling area.

Six degrees-of-freedom trackable areas are advantageous as they allow full pose characterization of the probing element and/or the coupling interfaces. Nevertheless, for many applications obtaining the position of said components is sufficient and in some alternative embodiments the probing element and/or the coupling interface comprises three degrees-of-freedom trackable areas. Having an area configured to be cooperatively tracked by the non-contact tracking unit provides benefits for the stability and/or the accuracy of the tracking the invention is not limited to embodiments having trackable areas.

In some embodiments, the CMM, in particular the support structure, is configured to be mounted to a mobile chassis. The mobile chassis is configured to transport the CMM from a first location to a second location. The mobile chassis might be an unpowered trolley, a manned or unmanned ground vehicle, a UAV, or a mobile robot. Alternatively, the CMM might be man-portable.

In some specific embodiments, the CMM exhibits a transport mode and a measurement mode. In the transport mode a part of the first and/or second limb is immobile, in particular the first and second limbs are interlocked. I.e., a mobility, or total degrees-of-freedom, of the first and/or the second limb is reduced with respect to a mobility in the measurement mode. The CMM is locked to the mobile chassis. Such transport mode is beneficial as the delicate joint drives and sensors are protected against the vibrations and/or shock events experienced during the transport. Alternatively, a part of, in particular each of the joints might be idling. Furthermore, the probing element might be moved to a parking position and/or dismounted during the transport model. In the measurement mode, the CMM is mechanically decoupled from the mobile chassis such that mechanical vibrations between the mobile chassis and the CMM are dampened. The advantage of this decoupling is that even though the CMM is still arranged to the mobile chassis it can perform high accuracy measurements. Mechanical decoupling might be realized e.g., by a passive or active pneumatic dampening element between the support structure and the mobile chassis.

The present invention further relates to a method of determining spatial coordinate data of an object point on a workpiece by a CMM, in particular a CMM according one of the above embodiments. The method comprises (i) providing an actual pose of a sensing area associated with a sensing end of a limb comprising a first set of links and a first set of joints, (ii) providing probing data comprising interaction information between the sensing area and the object point, (iii) providing an actual pose of a coupling area associated with a coupling end of a second limb comprising a second set of links, and/or a second set of joints (iv) providing coupling data comprising interaction information between the coupling area and a reference point, in particular a reference point on the workpiece, (v) deriving coupling pose change data based on the actual pose of the coupling area and the coupling data, and (vi) providing coordinate data of the object point based on the actual pose of the sensing area, the probing data and the coupling pose change data. The object point has a defined spatial relationship to the reference point. The first proximal end of the first limb opposing to the sensing end and a second proximal end of the second limb opposing to the coupling end are mechanically constrained to each other.

Some embodiments of the method comprise providing rigid mechanical coupling between the coupling area and the reference point. In some specific embodiments, the rigid mechanical coupling is provided by gripping the workpiece with the second limb and/or the coupling interface. Alternative methods of providing the rigid mechanical coupling are also within the sense of the invention. A non-exclusive list of these alternatives includes a permanent magnetic contact, and/or an electromagnetic contact, and/or a one-ball coupling, and/or a three ball coupling, and/or a lock-and-key contact, and/or bolted connection. Some specific embodiments of the method further comprise reducing the mobility of the limb, e.g., by immobilizing the joints.

Some specific embodiments of the method comprise mechanically decoupling the workpiece from the environment, e.g., by lifting the workpiece by the second limb and/or the coupling interface. Such embodiments are beneficial, e.g., when the workpiece is situated on a production line, e.g., on a conveyor belt. In such cases the measurement is carried out with a higher accuracy after decoupling the workpiece from the environment. The second limb may place a workpiece into a different location after completing the measurement. I.e., the CMM might be comprised by a robot performing further tasks.

In some embodiments of the method, the actual pose of the sensing area is provided based on first limb calibration parameters and the actual pose of the coupling area is provided on the basis of second limb calibration parameters.

In some embodiments of the method, the actual pose of the sensing area is provided by deriving first metrology chain data. Deriving the first metrology chain data comprises (i) accessing first geometry data for each link of the first set, in particular by processing sensor readings associated with the respective links, (ii) accessing first joint sensor data regarding a relative pose between proximal and distal sides of the respective joints, wherein the proximal side linked to the first proximal end by a respective proximal portion of the first limb and the distal side linked to the sensing area by a respective distal portion of the first limb, and (iii) deriving the actual pose of the sensing area based on the first geometry data and the first joint sensor data.

In some embodiment of the method, the actual pose of the coupling area is provided by deriving second metrology chain data. Deriving the second metrology chain data comprises (i) accessing second geometry data for each link of the second set, in particular by processing sensor readings associated with the respective links, (ii) accessing second joint sensor data regarding a relative pose between the proximal and distal sides of the respective joints, wherein the proximal side linked to the second proximal end by a respective proximal portion of the second limb and the distal side linked to the coupling area by a respective distal portion of the second limb, and (iii) deriving the actual pose of the coupling area based on the second geometry data and the second joint sensor data.

In some embodiments, the method comprises a further measurement phase. The further measurement phase comprises (i) selecting an object point from a set of measured object points as a second reference point, (ii) providing an actual pose of the sensing area relative to the further reference point, (iii) providing further coupling data comprising interaction information between the sensing area and the further reference point, (iv) deriving further coupling pose change data based on the actual pose of the sensing area and the further coupling data, (v) providing an actual pose of the coupling area, (vi) providing further probing data comprising interaction information between the coupling area and a further object point on the workpiece, and (vii) providing coordinate data of the further object point based on the actual pose of the coupling area, the further probing data and the further coupling pose change data. In other words, in the further measurement phase the role of the sensing and coupling areas and the first and second limbs are reversed. Such embodiments are advantageous during the measurement of a large workpiece by a mobile CMM. Such measurement might be performed as a set of chain linked measurements, wherein one of the object points will be treated as a reference point for the next measurement from the set of chain linked measurements.

The present invention further relates to a computer program product for the CMM which, when executed by a computing unit and/or a controller, in particular a controller for a CMM according to the invention, causes an automatic execution of the computational steps of a selected embodiment of the measurement method.

### BRIEF DESCRIPTION OF THE DRAWINGS

By way of example only, specific embodiments of the invention will be described more fully hereinafter with reference to the accompanying figures, wherein:
Figure 1a shows a schematically of a prior art three-axis CMM.
Figure 1b shows a schematically a prior art articulated arm inspection unit.
Figure 2a depicts schematically a prior art CMM performing a measurement.
Figure 2b shows a metrology chain during a prior art CMM measurement.
Figure 3a depicts schematically an inventive CMM with first and second limbs, the object and reference points coincide during a measurement step.
Figure 3b depicts a metrology chain of an inventive CMM with first and second limbs, the object and reference points coincide during a measurement step.
Figure 4a depicts schematically an inventive CMM with first and second limbs during a generic measurement step.
Figure 4b depicts the metrology chain of an inventive CMM with first and second limbs during a generic measurement step.
Figure 5a depicts a flowchart of a process, wherein an inventive CMM establishing mechanical coupling between the coupling interface and the workpiece.
Figure 5b depicts a flowchart of a process, wherein an inventive CMM establishing non-contact coupling between the coupling interface and the workpiece.
Figure 6 depicts schematically an inventive CMM mounted to a mobile chassis in a transport mode and in a measurement mode.
Figure 7 depicts a schematic measurement process of a large object with a CMM having limbs sequentially acting as the first and second limbs.
Figure 8 depicts a schematically an inventive portable CMM in a transport mode and during a measuring of a workpiece.
Figure 9a-c depict the schematics of a coupling based on a pose determination relative to a QR-code.
Figure 10a depicts a schematic calibration using a calibration object arranged to the second limb.
Figure 10b depicts a schematic calibration using the sensing and coupling areas.
Figure 11 depicts a flowchart representation of a calibration of the limbs.

### SPECIFIC EMBODIMENTS OF THE INVENTION

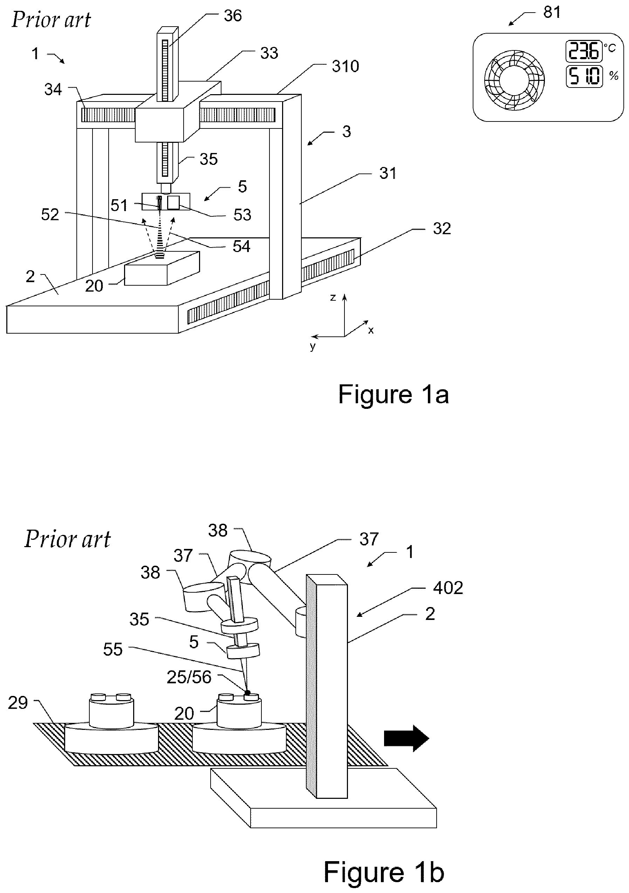

Figure 1a shows schematically a prior art three axis CMM **1.** The CMM **1** comprises a measuring table, as support structure **2**, supporting a workpiece **20.** While not shown, the measuring table **2** might comprise elements aiding the positioning, clamping, or otherwise fixing the workpiece **20.** Such further elements might be temporarily mounted to the measuring table **2.** The measuring table **2** is typically a heavy, inert object and considered to be stable during a measurement.

A movable frame is mounted on the measuring table **2** such that the girders **31** are movable along a first axis, depicted as the x-axis, by a first set of motors **32.** The frame comprises a bar **310** rigidly mounted between the girders **31.** A carrier **33** is mounted on the bar **310** such that it is movable by a second set of motors **34** along a second axis perpendicular to the first axis, depicted as the y-axis. The probe mounting **35** is mounted on the carrier **33** such that it is movable by a third set of motors **36** along a third axis perpendicular to both the first and second axes, depicted as the z-axis. The probing element **5** is mounted on the probe mounting **35.** The depicted probing element **5** is a non-contact probe with a beam emitter **51** emitting a primary beam **52** and a receiver **53** receiving the secondary beam **54** returned from the workpiece **20**, particularly from the object point **25.** In the sense of the invention the receiver **53** might be considered as a sensing area, the first set of joints can be identified as sliding joints comprising a motor (e.g., **35**) and an associated sliding element (e.g., **36**), whereas the girder **31** is a link. It is clear for the skilled person, that the in Figure 1a depicted basic three axis setup might be extended with further components providing further degrees-of-freedom, in particular rotation degrees-of-freedom. To ensure the required accuracy for a typical prior art CMM **1** the table **2** is heavier than the first limb **3**, whereas the workpiece **20** has dimensions and weights negligible as compared to table **2.**

To further improve the accuracy such CMMs **1** are typically installed in dedicated metrology laboratories with an air conditioning **81** operating in a strict regime (e.g., ±1 °C and ±10% humidity). This is not only disadvantageous from cost and production efficiency reasons but requires further energy consumption and can therefore lead to increased greenhouse gas emissions.

Figure 1b depicts another typical embodiment of a prior art CMM **1** as an articulated arm coordinate measuring/inspection unit. The depicted CMM **1** is placed next to a conveyor system **29**, wherein workpieces **20** are travelling towards a next station. The CMM comprises a support structure **2** and a first limb **3** linked to a first proximal end **402** located on the support structure **2.** The probing element **5** comprises a tactile sensor **55** with a ruby sphere as the sensing area **56.** Tactile sensors **55** typically establish a direct mechanical contact between the sensing area **56** and the object point **25.** The cylindrical links **38** of the first set of links and the joints **37** of the first set of joints provide a first metrology chain between the sensing area **56** and the first proximal end **402.** The depicted joints **36** provide at least one relative rotational degree-of-freedom.

It is clear to the skilled person that many combinations and alternatives of the depicted embodiments exist, in particular the probing element **5** can be altered without altering the first limb **3.** The embodiments depicted in Figures 1a-b serve solely illustrative purposes. The presently claimed invention is not limited to a specific type of CMM and can be applied to any reasonable design.

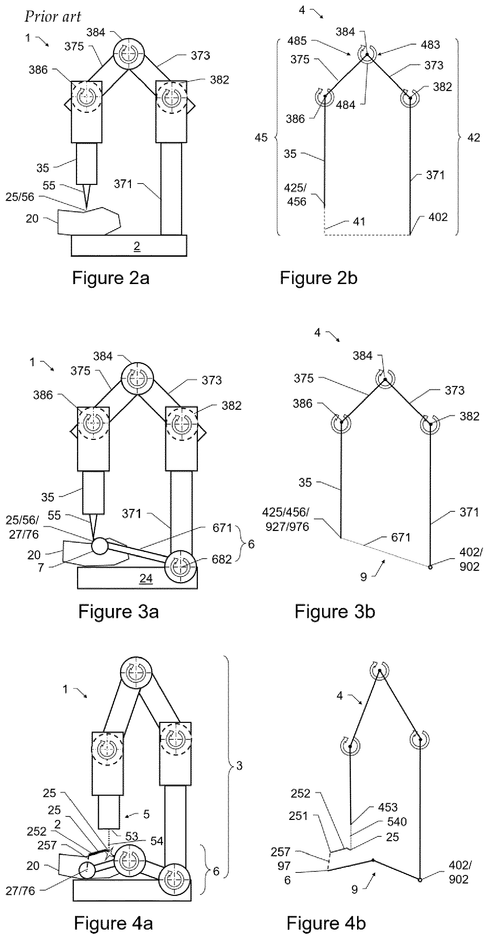

Figure 2a shows a schematic prior art AACMM 1 performing a measurement on a workpiece **20.** The AACMM **1** is mounted on a support structure **2**, e.g., a measurement table and the workpiece **20** is placed on the same structure. The AACMM comprises links **371,373,375,35** and joints **382,384,386.** For transparency reasons the joints **382,384,386** are depicted with only a single rotational degree-of-freedom. The first limb might comprise specific components to determine the geometry data of the links **371,373,375,35.** The depicted AACMM comprises a tactile probe **55**, i.e., the object point **25** is contacted with the sensing area **56** of the probe **55.**

Figure 2b depicts a first metrology chain **4** representing the same measurement process. The metrology chain **4** has a first proximal end **402** at the support structure and a sensing end **456** representing the position of the sensing area. For reasons of brevity and transparency the links **371,373,375,35** are considered rigid. Alternative embodiments comprising modeling and/or measuring certain deformations also exists in the prior art. Each joint, joint **384** shown as an example, has a proximal side **483** linked to the first proximal end **402** by a respective proximal portion **42** and distal side **485** linked to the sensing end **456** by a respective distal portion **45.** A joint sensor (not shown) measures a pose and/or pose change, e.g. a rotation around a single axis, between the proximal **483** and distal sides **485.** A drive unit (not shown) might provide a relative pose and/or pose change between the proximal **483** and distal sides **485.** The depicted metrology chain **4** is not closed, i.e., the accuracy of the measurement depends on the assumption that a closing portion **41** of the loop, provided by the workpiece and the measurement table, is mechanically rigid. To ensure this the measurement table is ideally heavy and the workpiece is ideally clamped.

The above requirements might be realized by a CMM according to the embodiment of Figure 1a at the cost of the bulkiness of the CMM. A coordinate measurement operation with the system depicted in Figure 1b, let alone with a lightweight mobile CMM, however cannot fulfill these requirements. Even if a measurement is performed during a phase when the conveyor is still, the inertness of the support structure and the conveyor system cannot be guaranteed, as such system must fulfill other design criteria.

Figure 3a depicts schematically an inventive AACMM **1** performing a measurement on a workpiece **20.** The AACMM **1** is mounted on a chassis component **24**, e.g., a measurement table, which is not part of the measurement loop. The AACMM **1** comprises the first set of links **371,373,375,35** and joints **382,384,386.** The depicted AACMM **1** comprises a tactile probe **55**, i.e., the object point **25** is contacted with the sensing area **56** of the probe **55.** The inventive AACMM **1** comprises a second limb **6.** The depicted second limb comprises one link **671** and one joint **682.** The second limb **6** might comprise further joints and links. The second limb **6** might comprise specific components to determine the geometry data of the links **671.** A coupling interface **7** is mounted to the second limb **6.** The depicted coupling interface **7** further comprises gripping, clamping or suitable alternative components to provide a rigid coupling between a reference point **27** on the workpiece **20** and a coupling area **76.** This enables a measurement e.g., on a lifted workpiece **20** as depicted. Nevertheless, the invention is applicable without a rigid coupling between the workpiece **20** and the coupling area **76.** In the embodiment depicted on Figure 3a the reference point **27** interacting with the coupling area **76** and the object point **25** interacting with the sensing area **56** are essentially the same. This serves illustrative purposes only.

Figure 3b depicts the first **4** and second metrology chains **9** representing the same measurement process. The first metrology chain **4** has a first proximal end **402** and a sensing end **456** representing the position of the sensing area. Similarly, to Figure 2b the links **371,373,375,35** are considered rigid. The second metrology chain **9** has a second proximal end **902** and a coupling end **976** representing the position of the coupling area. In the specific geometry depicted in Figure 3a the proximal ends **402/902** of the first **4** and second metrology chains **9** and the sensing **456** or coupling ends **976** respectively coincide. In a general case the pose of the respective proximal ends **402** and **902** are mechanically constrained. Since both the first **4** and second metrology chains **9** are open the respective distal ends **456**,**976** are not constrained, i.e., the depicted case represents a situation when a closed measurement loop contains only the metrology chains **4,9.**

Figure 4a and 4b represents a more generic case. Both the first **3** and second limbs **6** comprise a plurality of links and joints. The depicted probing element **5** is an optical probe configured to detect the secondary beam **54** returned from the workpiece **20.** The sensing area **53** is defined as a receiver of the probing element **5.** Figure 4a shows an intermediate stage of a measurement consisting of a plurality of measuring events along a measuring path **252.** The spatial relationship between the actual **25** and initial object points **251** is known. A pose difference **257** between the reference point/coupling area **27/76** and the initial object point **251**, even if unknown, is fix during the measurement process.

Figure 4b depicts a respective semi-closed measurement loop. The first part of the measurement loop between the first proximal end **402** and the sensing end **453** is the first metrology chain **4.** A second part between the sensing end **453** and the actual object point **25** is provided by a known spatial relationship established by the optical probing **540.** The third part between the actual **25** and initial object points **251 is** provided by a known spatial relationship established by the measuring path **252.** The fourth part **257** between the initial object point **251** and the coupling end **976** of the second metrology chain **9** is provided by a fixed, but unknown, pose difference between the coupling area and the initial object point **251.** In the depicted embodiment a direct, point like mechanical coupling between the coupling end **976** and the reference point exists. The fifth, closing part between the coupling end **976** and the second proximal end **902** is provided by the second metrology chain **9.**

Many alternatives of the embodiments depicted in Figures 3, and 4 exist. A non-exclusive list of alternatives comprises e.g., a second limb structurally and functionally equivalent of a first limb providing metrology grade data. The pose of the reference point and/or the pose change of the coupling area relative to the reference point might be determined by a measurement, in particular a non-contact measurement. Further reference points with known spatial relationship to the initial reference point might be defined. The first and second proximal ends might be connected by a support structure, in particle a substantially rigid support structure. The listed and further alternatives are combinable with each other.

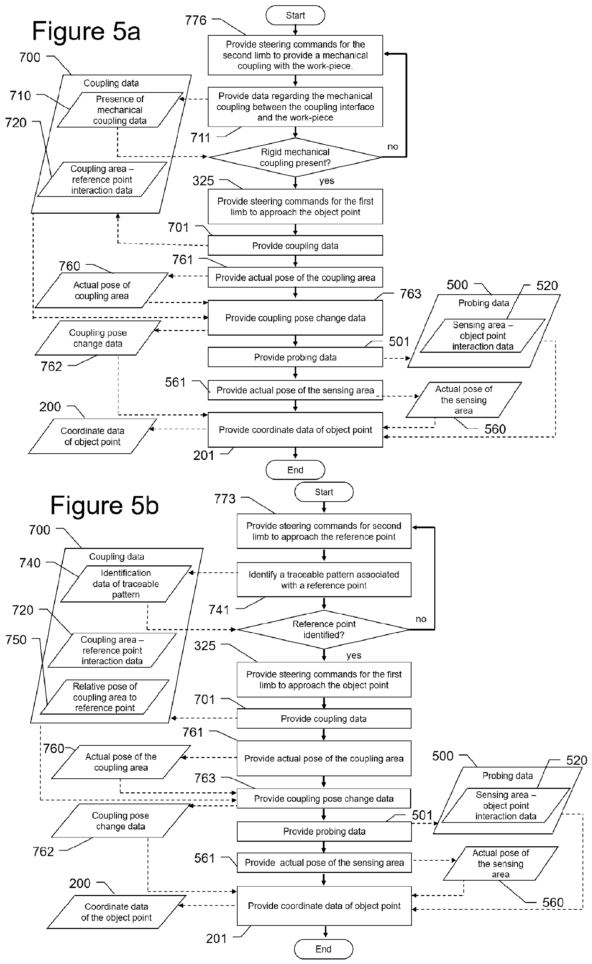

Figure 5a depicts a flowchart representation of a measurement process with an inventive CMM. Command/flow-lines show as bold and data-lines as dashed arrows. The depicted flowcharts focus on the features of the claimed invention and the actual embodiments comprise further, non-depicted elements, in particular command or data elements and/or data transfer lines. Moreover, command or data modules might be depicted in a simplified form due to reasons of clarity and conciseness. In the depicted embodiment the first and second limbs comprise respective kinematic chains to maneuver the sensing and coupling areas.

In the depicted process a mechanical coupling between the workpiece and the coupling interface is established by (i) providing **776** steering commands for the joints of the second limb to provide a mechanical coupling, and (ii) providing **711** data regarding the presence of mechanical coupling **710** between the coupling interface and the workpiece. When the mechanical coupling is present steering commands for the joints of the first limb are provided **325** to approach the object point. The actual measurement comprises (i) providing **701** coupling data **700** comprising interaction information **720** between the coupling area and the reference point, (ii) providing **761** an actual pose **760** of the coupling area, (iii) providing **763** coupling pose change data **762** based on the actual pose **760** of the coupling area and the interaction data **720** between the coupling area and the reference point, (iv) providing **501** probing data **500**, comprising interaction information **520** between the sensing area and the object point, (v) providing **561** an actual pose **560** of the sensing area, and (vi) providing **201** coordinate data **200** of the object point based on the actual pose **560** of the sensing area, the probing data **500** and the coupling pose change data **762.**

Figure 5b depicts a flowchart representation of a measurement process with an inventive CMM, where the coupling is provided by a non-contact coupling method. In the depicted process a non-contact coupling between the workpiece and the coupling interface is established by (i) providing **776** steering commands for the joints of the second limb to approach a reference point, and (ii) identifying **741** a traceable pattern associated with the reference point and providing identification data **740** regarding the traceable pattern. When the traceable pattern is identified steering commands for the joints of the first limb are provided **325** to approach the object point. The actual measurement comprises (i) providing **701** coupling data **700** comprising interaction information **720** between the coupling area and the reference point and a relative pose **750** of the coupling area to the reference point, (ii) providing **761** an actual pose **760** of the coupling area, (iii) providing **763** a coupling pose change data **762** based on the actual pose **760** of the coupling area and the relative pose **750** of the coupling area to the reference point, (iv) providing **501** probing data **500** comprising interaction information **520** between the sensing area and the object point, (v) providing **561** an actual pose **560** of the sensing area, and (vi) providing **201** coordinate data **200** of the object point based on the actual pose **560** of the sensing area, the probing data **500** and the coupling pose change data **762.**

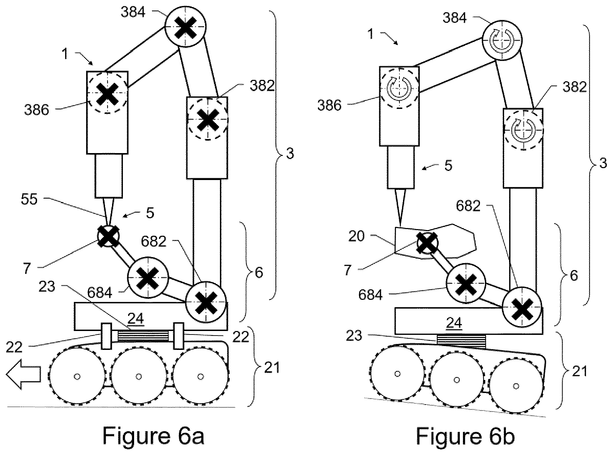

Figure 6a depicts a schematic CMM **1** mounted to a mobile carrier **21.** By way of example the mobile carrier **21** comprises three wheeled axes. The invention is not limited to the depicted embodiment. A CMM **1** according to the invention might be applicable with any reasonable realization of the mobile carrier, a non-exclusive list includes alternative wheel arrangements, tracked, legged, or flying/hovering carriers or even man-portable CMM-s **1.**

The mobile carrier **21** and/or the chassis component **24** might comprise vibration dampening elements **23**, e.g., pneumatic elements. In the depicted embodiment the first **3** and second limbs **6** are directly connected. I.e., the chassis component **24** is not part of the measurement loop. The chassis component **24** might comprise a support structure providing a rigid connection between the proximal ends of the first **3** and second limbs **6.** Such support structures are part of the measurement loop. The mobile carrier **21** and/or the chassis component **24** might comprise fixing elements **22** configured to lock the chassis component **24** to the mobile carrier **21**, in particular in a transport mode as depicted. Furthermore, the first **382,384,386** and the second set of joints **682,684** might also be partially, in particular completely as depicted, immobilized in the transport mode. In the depicted embodiment the probe head **5** comprises a tactile sensor **55** and the coupling interface **7** is interlocked with the tactile sensor **55.** Different types of interlocking of the first **3** and second limbs **6** are within the sense of the invention.

Figure 6b shows the same CMM **1** performing a measurement in a measurement mode. The chassis component **24** is now connected to the mobile carrier **21** only by the vibration dampening element **23**, i.e., the CMM **1** is decoupled from the environment. By way of example the mobile carrier **21** is standing on uneven ground, this is also compensated by the vibration dampening element **23**, however the invention is equally applicable without such compensation. The first set of joints **382,384,386** exhibit a full mobility in the measurement mode, so far other requirements, in particular requirements of improved precision, does not motivate an immobilization of one or more joints. The second set of joints **682,684** are immobilized to provide an improved accuracy. The coupling interface **7** provides a rigid mechanical coupling with the workpiece **20.** The invention is not limited to the depicted embodiment and might be equally applied if the coupling interface **7** does not provide a rigid mechanical coupling to the workpiece but provides a coupling data comprising interaction information between the coupling area and a reference point, in particular a relative pose of the coupling area to the reference point.

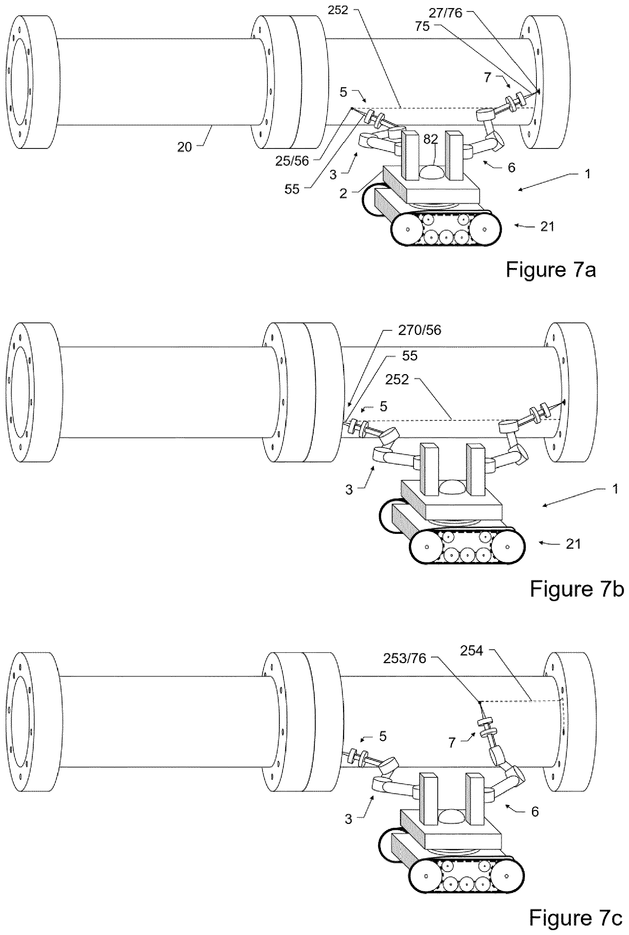

Figure 7a depicts a pipe as large workpiece **20** to be inspected by a mobile CMM **1.** A support structure **2** connecting the first **3** and the second limbs **6** is mounted on a mobile chassis **21**, depicted as a track drive. The support structure **2** is a part of the measurement loop, the mobile chassis **21** is, however, not comprised by the measurement loop. The depicted first **3** and second limbs **6** comprise identical structural and functional elements and distinguished by utilization only. Alternatively, the first **3** and second limbs **6** might be substantially similar. By way of example both limbs comprise respective tactile sensors **55,75.** The tactile sensor **55** of the first limb **3** is used as probing element **5** providing probing data, whereas the sensing area **56**, depicted as a ruby sphere, is guided along the measurement path **252.** The tactile sensor **75** of the second limb **6** is used as coupling interface **7** providing coupling data, i.e., the coupling area **76** maintains contact with a reference point **27** and a relative pose change between the coupling area **76** and the reference point is **27** provided. The probing element **5** and coupling interface **7** might also comprise further physical components providing a rigid mechanical coupling to the workpiece **20.** The depicted CMM **1** also comprises further sensors **82**, e.g., a camera to provide at least a coarse localization against the workpiece **20.** Providing further similar or alternative sensors is within the sense of the invention.

Figure 7b depicts a transition to a next measurement phase. The first phase is completed and the measuring path **252** has reached its endpoint. The ruby sphere **56** of the tactile sensor **55** maintains contact with a further reference point **270.** In other words, the first limb **3** will provide the functionalities "of the second limb". Since the CMM **1** is decoupled from the mobile chassis **21**, i.e., the metrology loop is not closed through the mobile chassis **21**, a repositioning of a CMM **1** according to the invention is also possible.

Figure 7c depicts the next measurement phase wherein the second limb **6** is guiding the coupling area **76** along a further measurement path **253** of the next phase and providing coordinate data of further object points **254.** I.e., the second limb **6** provides the functionalities of the "first limb". The probing element **5** and the first limb **3** provide the further coupling data. By performing a plurality of such transitions, a large workpiece **20** can be accurately measured. In the depicted embodiment boreholes **202** are used as references. The workpiece **20** might have designated coupling counterparts, e.g., a one-ball coupling, three-ball coupling, a jig, or an electromagnetic coupling counterpart. Such coupling counterparts might have identifiers which can be detected by the probing element **5**, and/or the coupling interface **7** and/or one or more further sensors **82.**

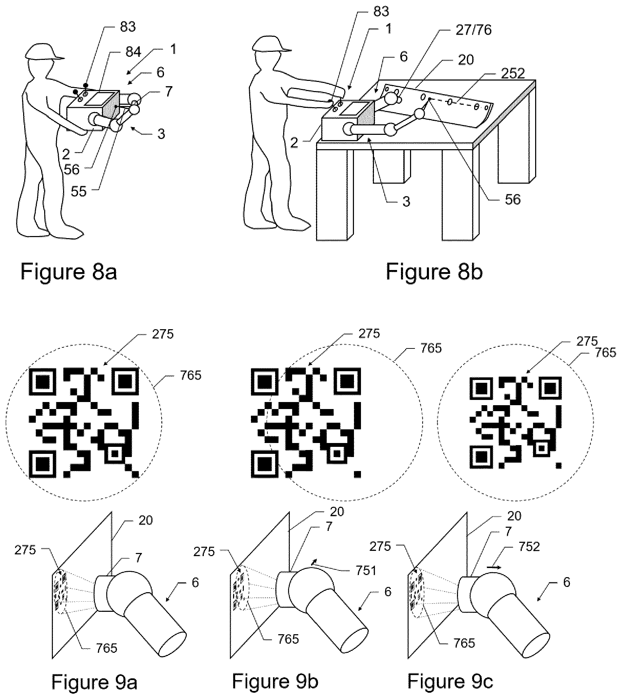

Figure 8a depicts a lightweight, man portable CMM **1** in a transport mode. The depicted CMM **1** comprises a support structure **2** connecting the first **3** and second limbs **6**, and featuring input elements **83** to receive operator input, depicted as a pair of joysticks, and output elements **84**, depicted as a screen. The first limb **3** has a plurality of joints and links. A tactile sensor **55**, with a ruby sphere as sensing area **56,** is mounted on the first limb **3.** The second limb **6** is substantially similar to the first limb **3.** A coupling interface **7** configured to provide a releasable rigid mechanical coupling via electromagnetic elements is mounted on the second limb **6.** In the depicted transport mode, the first **3** and second limbs **6** are interlocked by the coupling element **7.**

Figure 8b depicts the same man portable CMM **1** in a measurement mode measuring e.g., a ferromagnetic workpiece **20.** A releasable rigid mechanical coupling is established between the coupling area **76** and a reference point **27** located on the workpiece **20.** I.e., the pose of the workpiece **20** is locked to that of the second limb **6.** The second limb **6** might also be locked during the measurement. Alternatively, the second limb **6** might provide controlled pose change for the workpiece **20.** As a result, a semi-closed metrology loop is provided through the second limb **6**, the support structure **2**, the first limb **3** and the workpiece **20.** The operator, via the input interface **83**, provide commands regarding a desired movement of the sensing area **56** along a measurement path **252.** Due to the semi-closed metrology loop, in particular when the second limb **6** is locked, the accuracy in deriving the pose of the sensing area **56** determines the accuracy of the measurement.

Aspects of the embodiments of the mobile CMM of Figures 6 and 7 are combinable with the aspect of the portable CMM of Figure 8. Moreover, a CMM according to the invention might also be transported by a legged robot or an UAV as mobile carrier and/or transport vehicle. Neither the probing element nor the coupling interface is limited to the depicted embodiments. Alternative components, working principles or utilization methods are within the sense of the invention.

Figure 9 depicts a method of deriving the coupling pose change data by a coupling interface **7** based on non-contact principle. The coupling interface is located at the coupling end of the second limb **6.** By way of example the reference point on the workpiece **20** is associated with a OR-code as traceable pattern **275**.The invention is applicable in combination with patterns different from OR-codes. The pattern might be a text, an area with different reflectivity, surface roughness. The pattern might also be a functional feature of the workpiece **20**, e.g., one or more drill holes and/or screw heads, and/or edges and/or corners. The invention is applicable with any suitable combinations or alternatives of the above non-exclusive list.

The depicted coupling interface **7** is configured to acquire imaging data from a field of view **765**, in particular camera images. The coupling pose change data is based on the relative position and/or motion of the traceable pattern **275** in the field of view **765.** Figure 9 depicts some examples relative positions. The bottom row shows the second limb **6** relative to the workpiece **20.** The top row shows the pattern **275** in the field of view **765.** In Figure 9a the pattern **275** is in a first alignment to the field of view **765.** Since the invention require only the determination of a relative pose change of the coupling area to the reference point, many alternative alignments are possible as first alignments. Figure 9b depicts a situation, where a relative lateral movement **751** between the workpiece **20** and the coupling interface **7** took place. As a result, the pattern **275** moved relative to the field of view **765.** Figure 9c depicts an example wherein the distance has changed **752** between the workpiece **20** and the coupling interface **7.** As a result, the size of the pattern **275** relative to the field of view **765** has changed. Based on the image data the coupling pose change data can be determined. Relative rotations have the respective effects.

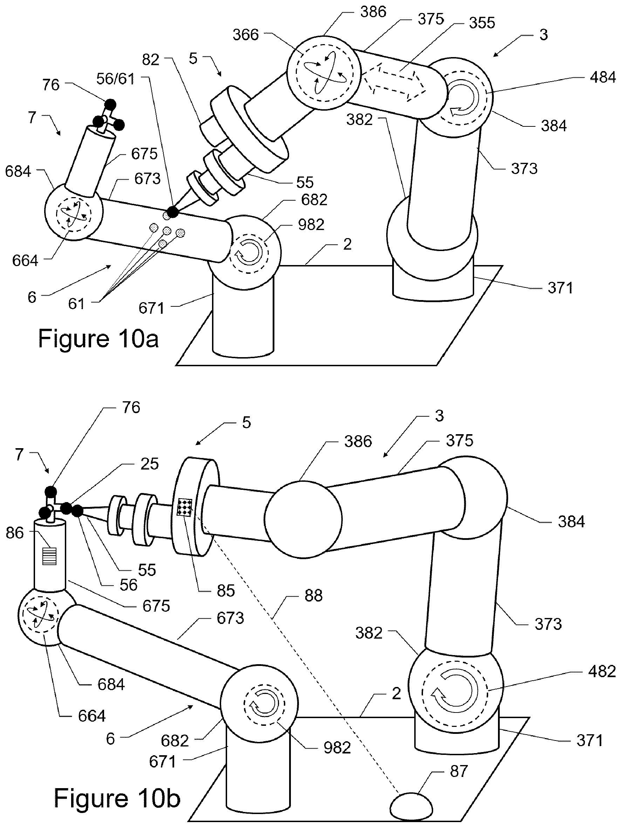

Figure 10a depicts a schematic step from a reference-free calibration using a calibration object **61** arranged on the second limb **6** as internal calibration object. The probing element **5** in the depicted embodiment comprises a tactile sensor **55** with a ruby sphere as sensing area **56.** The probing element **5** also has a visual sensor **82** arranged to it, said visual sensor **82** might be a positioning aid, e.g., by providing visual data regarding the pose of the sensing area **56** and the workpiece. The visual sensor **82** can also be a metrology grade sensor providing coordinate data by non-tactile measurements. The first limb **3** is mounted on a support structure **2** and comprises the first set of joints **382,384,386** and links **371,373,375.** For transparency reasons only a single first drive unit **484**, a single joint sensor unit **366**, and a single sensor **355** associated with a link **375** have been depicted. The first limb **3** provides a respective metrology chain with the required sensors **355,366.** Embodiments, wherein the first limb **3** comprises a kinematic chain to provide a set pose of the probe are advantageous. The first limb calibration parameters might comprise free parameters to be determined with respect to the sensor data provided by the sensors **355,366.** The depicted degrees-of-freedom of the sensor and drive units serve illustrative purposes and shall not be interpreted in a limiting manner. Neither is the invention limited to the depicted arrangement of the first limb **3.** The second limb **6** is mounted on the support structure **2** in a different position than the first limb **3.** Alternative embodiments, wherein the first **3** and second limbs **6** comprise common components are also within the sense of the invention.

The depicted second limb **6** comprises the second set of joints **682,684** and links **671,673,675.** For transparency reasons only a single second drive unit **982** and a single joint sensor unit **664** have been depicted, however the second limb **6** provides the respective metrology chain. A coupling interface **7** with a coupling area **76**, depicted as a three-ball gauge, is arranged to the second limb **6.** The link **673** comprises a calibration pattern with a plurality of calibration objects **61** in a known spatial arrangement. The depicted arrangement is advantageous as the joint **682** provides a plurality of calibration poses for the calibration objects with a pose uncertainty arising from a single joint. I.e., the pose accuracy of the calibration object **61** might exceed that of the sensing area **56.** Arranging the calibration object to a link farther from the support structure **2** provides a benefit in increased flexibility. The invention is not limited to any specific design.

The depicted calibration comprises the step of contacting the sensing area **56** to the calibration object **61.** By recording the sensor data, e.g., from the joint sensor units **366**, the measured pose of the sensing area **56**, i.e., the first calibration data, can be derived utilizing first limb calibration parameters. The second metrology chain provides the second calibration data, i.e., an actual pose of the calibration object **61** based on the second limb calibration parameters. The calibration parameters can be updated based on a deviation between the actual pose of the calibration object **61** and the measured pose of the sensing area **56.** A complete calibration procedure might involve a set of single calibration measurements with a plurality of poses for the calibration object **61.** A similar calibration is applicable to non-contact sensor.

Figure 10b depicts a schematic step from a method of calibrating the limb calibration parameters by measuring the pose of an object point **25** associated with the coupling area **76** of the coupling interface **7** by the probing element **5.** The probing element **5** in the depicted embodiment comprises a tactile sensor **55** with a ruby sphere as sensing area **56.** The probing element **5** comprises a first six degrees-of-freedom trackable area **85**, depicted as a visual marker, associated with the pose of the sensing area **56.** The second limb **6** comprises a second six degrees-of-freedom trackable area **86**, depicted as a visual marker, associated with the pose of the coupling area **76.** A non-contact tracking unit **87**, depicted as a laser tracker, is mounted on the support structure **2.** The tracking unit **87** tracks the markers **85,86** using a laser beam **88** to determine the pose of the sensing **56** and the coupling areas **76.** The laser tracker **87** might provide supplementary pose information regarding the pose of the sensing **56** or coupling area **76.** The depicted calibration method might also be used to provide update for a set calibration parameter of the laser tracker **87.**

The first limb **3** is mounted on the support structure **2** and comprises the first set of joints **382,384,386** and links **371,373,375.** For transparency reasons only a single first drive unit **482** and no joint sensor units are depicted. The depicted second limb **6** comprises the second set of joints **682,684** and links **671,673,675.** For transparency reasons only a single second drive unit **982** and a single joint sensor unit **664** have been depicted. A coupling interface **7** with a coupling area **76,** depicted as a three-ball gauge, is arranged to the second limb **6.** An object point **25** is associated with the pose of the coupling interface **76.**

The depicted calibration comprises of bringing the coupling interface **76** to a calibration pose. The second metrology chain provides a second calibration data based on the sensor data of the second set of sensors, and the second limb calibration parameters. Based on the sensor data of the first set of sensors the measured pose of the sensing area **56,** i.e., the first calibration data, can be derived using the first limb calibration parameters.

Alternative embodiments, in particular, wherein the coupling interface **7** and the probe **5** are interlocked, are within the sense of the invention. Such embodiments are especially beneficial as they enable a continuous constrained movement, wherein the pose of the coupling area **76** and sensing area **25** could be derived for a plurality of first and/or second limb movements. One of the limbs **3,6** might provide the driving force and at least a part of the joints **382,384,386,682,684** of the other limb might be idling.

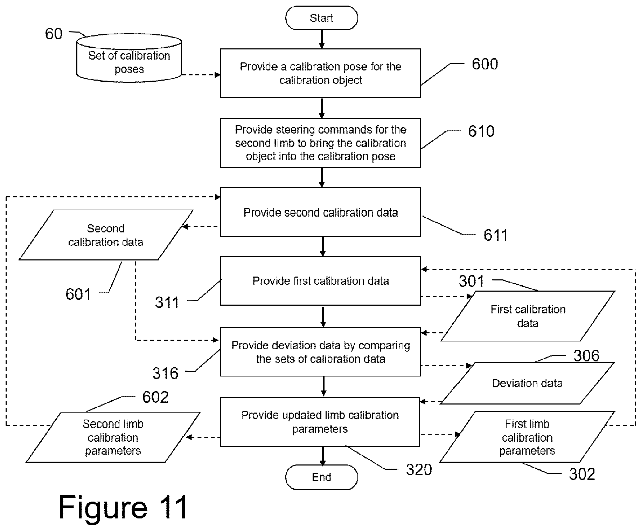

Figure 11 depicts a flowchart representation of the calibrations of Figure 10. In the first step a probe calibration pose, with associated nominal coordinate data, is selected **600** from a stored set of probe calibration poses **60.** Steering commands for the respective joints of the second limb are provided **610** to bring the calibration object into the calibration pose. A second calibration data **601** of the calibration object is provided **611** by the second metrology chain utilizing the second limb calibration parameters **602.** A first calibration data **301** of the calibration object is then provided **311** by measuring it with the probing element, i.e., by the first metrology chain, utilizing the first limb calibration parameters **302.** The deviation data **306** is provided by comparing **316** the first **301**, and the second calibration data **601.** Based on the deviation data **306** updated first **302** and second limb calibration parameters **602** are provided **320.** It is clear for the skilled person, that a typical calibration involves a plurality of calibration poses. Cases where the deviation data comprises data from a plurality of calibration object poses and/or different parts of the calibration object are within the sense of the invention. Other reasonable variations of the calibration, in particular wherein measured coordinate data regarding the same calibration object pose are provided by alternative joint poses of the first set of joints, are also within the sense of the invention. Furthermore, a CMM according to the invention might allow a derivation of further calibration object poses based on model calculations or measurements.

The depicted calibration method assumed that the second limb comprises a kinematic chain, and the calibration poses are provided by the said kinematic chain. It is clear to the skilled person that the claimed invention is not limited to this embodiment. The invention can be realized by embodiments e.g., wherein both limbs are driven or wherein a part of the joints idling.

Although the invention is illustrated above, partly with reference to some specific embodiments, it must be understood that numerous modifications and combinations of different features of the embodiments can be made. All of these modifications lie within the scope of the appended claims.

## Claims

1. Coordinate measuring machine, CMM (1), for determining spatial coordinate data (200) of an object point (25) on a workpiece (20), the CMM (1) comprising a first limb (3) and a probing element (5), wherein
- the first limb (3) comprises a first set of joints (35,37,382,384,386), a first set of links (38,371,373,375) and connects the probing element (5) at a sensing end (453,456) to a first proximal end (402),
- the probing element (5) is configured to provide (501) probing data (500) comprising interaction information (520) between a sensing area (53,56) of the probing element (5) and the object point (25), and
- the CMM (1) is configured to determine (561) an actual pose (560) of the sensing area (53,56),
**characterized in that**
the CMM (1) comprises a second limb (6) and a coupling interface (7), wherein
- the second limb (6) comprises a second set of links (671,673,675) and/or a second set of joints (682,684), and connects the coupling interface (7) at a coupling end (976) to a second proximal end (902), wherein the second proximal end (902) is mechanically constrained to the first proximal end (402),
- the coupling interface (7) is configured to provide (701) coupling data (700) comprising interaction information (720) between a coupling area (76) of the coupling interface (7) and a reference point (27), wherein the object point (25) has a defined spatial relationship to the reference point (27), in particular wherein the reference point (27) is comprised by the workpiece (20), and
the CMM (1) is further configured
- to determine (761) an actual pose (760) of the coupling area (76),
- to provide (763) coupling pose change data (762) based on the actual pose (760) of the coupling area (76) and the coupling data (700), and
- to provide (201) the coordinate data (200) of the object point (25) based on the probing data (500), the actual pose (560) of the sensing area (53,56), and the coupling pose change data (762).

2. The CMM according to claim 1, wherein the first (402) and the second proximal ends (902) coincide, or a substantially rigid support structure (2) connects the first (402) and second proximal ends (902).

3. The CMM (1) according to any one of claims 1 to 2, wherein
- each joint of the first set of joints (35,37,382,384,386) comprises
∘ a proximal side (483) connected to the first proximal end (402) by a respective proximal portion (42) of the first limb (3),
∘ a distal side (485) connected to the probing element (5) by a respective distal portion (45) of the first limb (3), and
∘ a joint sensor unit (366) configured to provide first joint sensor data regarding a relative pose and/or pose change between the proximal (483) and distal sides (485) of the joint (35,37,382,384,385);
- each joint of the second set of joints (682,684) comprises
∘ a proximal side connected to the second proximal end (902) by a respective proximal portion of the second limb (6),
∘ a distal side connected to the coupling interface (7) by a respective distal portion of the second limb (6), and
∘ a joint sensor unit (664) configured to provide second joint sensor data regarding a relative pose and/or pose change between the proximal and distal sides of the joint;
in particular wherein,
- a subset of the first set of joints (35,37,382,384,386) comprises a first drive unit (482,484) configured to provide the relative pose and/or the pose change between the proximal (483) and distal sides (485) of the joint (35,37,382,384,386),
- the CMM (1) is configured
∘ to access computer generated or operator input data regarding a desired pose or movement of the sensing area (53,56),
∘ to provide (325) steering commands to the first drive unit (482,484) based on the desired pose or movement and the actual pose (560) of the sensing area (53,56)
- a subset of the second set of joints (682,684) comprises a second drive unit (982) configured to provide the relative pose and/or the pose change between the proximal and distal sides of the joint (682,684), and
- the CMM (1) is configured
∘ to access computer generated or operator input data regarding a desired pose or movement of the coupling area (76), and
∘ to provide steering commands for the second drive unit (982) based on the desired pose or movement and the actual pose (760) of the coupling area (76).

4. The CMM (1) according to claim 3, wherein each joint of the first (35,37,382,384,386) and second sets of joints (682,684) is a rotary joint and each link (38,371,373,375,671,673,675) has a substantially cylindrical shape, in particular, wherein
- the pose change between the respective proximal and the distal sides is a rotation around one or more axes,
- the respective joint sensor data comprises rotation angle data, and
- the probing element (5) comprises a tactile sensor (55), and the probing data (500) comprises contact and/or friction force information between the sensing area (53,56) and the object point (25).

5. The CMM (1) according to any one of the preceding claims being configured
- to store first (302) and second limb calibration parameters (602)
- to determine the actual pose (560) of the sensing area (53,56) based on the first limb calibration parameters (302), and
- to determine the actual pose (760) of the coupling area (76) based on the second limb calibration parameters (602).

6. The CMM (1) according to claim 5 comprising an internal calibration object and reference-free calibration functionality comprising
- providing (600) a calibration pose of the internal calibration object,
- providing (311) first calibration data (301) comprising spatial coordinates of the internal calibration object in the calibration pose based on the first limb calibration parameters (302),
- providing (611) second calibration data (601) comprising spatial coordinates of the internal calibration object in the calibration pose based on the second limb calibration parameters (602),
- providing (316) deviation data (306) based on the first (301) and the second calibration data (601), in particular wherein the deviation data (306) is proportional to a difference of the spatial coordinates, and
- updating the first (302) and/or the second limb calibration parameters (602) based on the deviation data (306),
in particular wherein
- a plurality of calibration poses of the internal calibration object is provided (600),
- the reference-free calibration functionality further comprises mechanically interlocking the first (3) and second limbs (6).

7. The CMM (1) according to any one of the preceding claims, wherein
- the coupling interface (7) is configured to provide a rigid mechanical coupling between the coupling area (76) and the reference point (27), and
- the coupling data (700) comprises data regarding a presence of the rigid mechanical coupling (710),
in particular wherein
- the coupling interface (7) is configured to grip the workpiece (20), and
- the CMM (1) is configured provide (776) steering commands for the second limb (6) based on the actual pose (760) of the coupling area (76) and relative coordinate data (720) of the reference point (27).

8. The CMM (1) according to claim 7, wherein the coupling interface (7) comprises a first locking element and the workpiece (20) comprises a second locking element associated with the reference point (27), wherein the first and second locking elements are configured to provide a releasable, substantially rigid mechanical coupling (710),
in particular wherein providing the rigid mechanical coupling (710) between the coupling area (76) and the reference point (27) further causes a reduced mobility for a part of the second set of joints (682,684), in particular causes an immobile state for each joints in the second set of joints (682,684).

9. The CMM (1) according to any one of the claims 1 to 6, wherein
- the workpiece (20) comprises a traceable pattern (275), in particular an optically traceable pattern, more particularly a OR-code, wherein the pose of the reference point (27) is associated with the traceable pattern (275),
- the CMM (1) is configured to
∘ identify (741) the traceable pattern (275), and
∘ provide a relative pose (750) of the coupling area (76) to the reference point (27); and
- the coupling data (700) comprises the relative pose (750) of the coupling area (76) to the reference point (27).

10. The CMM (1) according to any one of the preceding claims comprising a non-contact tracking unit (87) for determining (561) a pose (560) of the sensing (53,56) and/or the coupling area (76),
in particular wherein
- the non-contact tracking unit (87) is configured for determining the pose based on laser and/or image based tracking, and
- the first limb (3) and/or the probing element (5) comprises a first six degrees-of-freedom trackable area (85) associated with the pose (560) of the sensing area (53,56), and/or
- the second limb (6) and/or the coupling interface (7) comprises a second six degrees-of-freedom trackable area (86) associated with the pose (760) of the coupling area (76).

11. The CMM (1) according to any one of the preceding claims being configured to be mounted to a mobile chassis (21) being configured to transport the CMM (1) from a first location to a second location,
in particular wherein the CMM (1) exhibits a transport mode and a measurement mode, wherein
- in the transport mode a part of the first (3) and/or second limb (6) is immobile, in particular the first (3) and second limbs (6) are interlocked, and the CMM (1) is locked to the mobile chassis (21), and
- in the measurement mode, the CMM (1) is mechanically decoupled from the mobile chassis (21) such that mechanical vibrations between the mobile chassis (21) and the CMM (1) are dampened.

12. A method of determining spatial coordinate data (200) of an object point (25) on a workpiece (20) by a CMM (1), in particular a CMM (1) according to any one of claims 1 to 11, the method comprising
- providing (561) an actual pose (560) of a sensing area (53,56) associated with a sensing end (453,456) of a first limb (3) comprising a first set of links (38,371,373,375) and a first set of joints (35,37,382,384,386),
- providing (501) probing data (500) comprising interaction information (520) between the sensing area (53,56) and the object point (25),
- providing (761) an actual pose (760) of a coupling area (76) associated with a coupling end (976) of a second limb (6) comprising a second set of links (671) and/or a second set of joints (682,684),
- providing (701) coupling data (700) comprising interaction information (720) between the coupling area (76) and a reference point (27), in particular a reference point (27) on the workpiece (20),
- deriving (763) coupling pose change data (762) based on the actual pose (760) of the coupling area (76) and the coupling data (700), and
- providing (201) coordinate data (200) of the object point (25) based on the actual pose (560) of the sensing area (53,56), the probing data (500) and the coupling pose change data (762).

13. The method according to claim 12, further comprising providing rigid mechanical coupling between the coupling area (76) and the reference point (27),
in particular wherein
- the mechanical coupling is provided by gripping the workpiece (20) with the second limb (6) and/or the coupling interface (7), and/or
- the method further comprises mechanically decoupling the workpiece (20) from the environment, in particular by lifting the workpiece (20) by the coupling interface (7), and/or
- the method further comprises reducing the mobility of the second limb (6).

14. The method according to any one of claims 12 or 13, comprising a further measurement phase, wherein the further measurement phase comprises
- selecting an object point (25) from a set of measured object points as a further reference point (270),
- providing (561) the actual pose (560) of the sensing area (53,56) relative to the further reference point (270),
- providing further coupling data comprising interaction information between the sensing area (53,56) and the further reference point (270),
- deriving further coupling pose change data based on the actual pose (560) of the sensing area (53,56) and the further coupling data,
- providing (761) the actual pose (760) of the coupling area (76),
- providing further probing data comprising interaction information between the coupling area (76) and a further object point (253) on the workpiece (20), and
- providing coordinate data of the further object point (253) based on the actual pose (760) of the coupling area, the further probing data and the further coupling pose change data.

15. A computer program product, which, when executed by a computing unit and/or a controller, in particular a controller for a CMM (1) according to any one of claims 1 to 11, causes an automatic execution of the computational steps of the method according to any of claims 12 to 14.
